# EUROPEAN PATENT APPLICATION

(11) **EP 4 797 706 A1**
(43) Date of publication of application: **26.08.2026**
(21) Application number: 24878865.5
(22) Date of filing: 08.10.2024
(51) Int. Cl.: H04N 21/431

(54) **INTERFACE INTERACTION METHOD AND APPARATUS, DEVICE, AND STORAGE MEDIUM**

(30) Priority: 17.10.2023 CN 202311345171
(71) Applicant: Beijing Zitiao Network Technology Co., Ltd., Beijing 100190 (CN)
(72) Inventor: LAI, Zhiwen, Beijing 100028 (CN); CHENG, Hu, Beijing 100028 (CN)
(74) Representative: Grünecker Patent- und Rechtsanwälte PartG mbB
(86) International application number: PCT/CN2024/123495
(87) International publication number: WO 2025/082221

(57) **Abstract**

Embodiments of the disclosure relate to a method, apparatus, device and storage medium for interface interaction. The method provided herein includes: presenting a preview interface of a live streaming room, the preview interface of the live streaming room being configured to display live streaming content of the live streaming room in a state not entering the live streaming room, wherein the live streaming content is displayed in a first layout mode in the preview interface; presenting, in accordance with receiving a first operation associated with the preview interface, a first live streaming interface of the live streaming room, such that the live streaming content of the live streaming room is displayed in the first layout mode in the first live streaming interface; and presenting, in accordance with receiving a second operation associated with the preview interface, a second live streaming interface of the live streaming room, such that the live streaming content of the live streaming room is displayed in a second layout mode in the second live streaming interface, the second layout mode being different from the first layout mode. In this way, the embodiments of the disclosure can support a user quickly switching from a preview interface to a desired layout mode in a live streaming interface.

## Description

### CROSS-REFERENCE

The present application claims priority to Chinese Patent Application No. 202311345171.3, filed on Oct. 17, 2023, entitled "METHOD, APPARATUS, DEVICE AND STORAGE MEDIUM FOR INTERFACE INTERACTION", the entirety of which is incorporated herein by reference.

### FIELD

Example embodiments of the present disclosure generally relate to a field of computers, and in particular, to a method, apparatus, device and computer-readable storage medium for interface interaction.

### BACKGROUND

With development of computer technologies, the Internet has become an important source for people to obtain various contents. Live streaming technologies, which uses the Internet and streaming media technologies for content propagation, are developing rapidly, people can have various types of interaction through a live streaming room, and obtain rich types of information through the live streaming room. A user may enter the live streaming room, for example, by interacting with a preview interface of the live streaming room, to obtain other content in the live streaming room or perform more interaction.

### SUMMARY

In a first aspect of the present disclosure, a method for interface interaction is provided. The method includes: presenting a preview interface of a live streaming room, the preview interface of the live streaming room being configured to display live streaming content of the live streaming room in a state not entering the live streaming room, wherein the live streaming content is displayed in a first layout mode in the preview interface; presenting, in accordance with receiving a first operation associated with the preview interface, a first live streaming interface of the live streaming room, such that the live streaming content of the live streaming room is displayed in the first layout mode in the first live streaming interface; and presenting, in accordance with receiving a second operation associated with the preview interface, a second live streaming interface of the live streaming room, such that the live streaming content of the live streaming room is displayed in a second layout mode in the second live streaming interface, the second layout mode being different from the first layout mode.

In a second aspect of the present disclosure, an apparatus for interface interaction is provided. The apparatus includes: a first presentation module configured to present a preview interface of a live streaming room, the preview interface of the live streaming room being configured to display, in a state not entering the live streaming room, live streaming content of the live streaming room, wherein the live streaming content is displayed in a first layout mode in the preview interface; a second presentation module configured to present, in accordance with receiving a first operation associated with the preview interface, a first live streaming interface of the live streaming room, such that the live streaming content of the live streaming room is displayed in the first layout mode in the first live streaming interface; and a third presentation module configured to present, in accordance with receiving a second operation associated with the preview interface, a second live streaming interface of the live streaming room, such that the live streaming content of the live streaming room is displayed in a second layout mode in the second live streaming interface, the second layout mode being different from the first layout mode.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium stores a computer program, and the computer program is executable by the processor to implement the method of the first aspect.

It should be understood that the content described in this summary section is not intended to limit key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure may be implemented;
FIGS. 2A to 2C illustrate example interfaces according to some embodiments of the present disclosure;
FIG. 3 illustrates a flowchart of an example interface interaction process according to some embodiments of the present disclosure;
FIG. 4 illustrates a schematic structural block diagram of an apparatus for interface interaction according to some embodiments of the present disclosure; and
FIG. 5 illustrates a block diagram of an electronic device capable of implementing various embodiments of the present disclosure.

### DETAILED DESCRIPTION

Embodiments of the present disclosure will be described in more detail below with reference to the accompanying drawings. Although some embodiments of the present disclosure are shown in the accompanying drawings, it should be understood that the present disclosure may be implemented in various forms, and should not be interpreted as limited to embodiments set forth herein, on the contrary, these embodiments are provided for a more thorough and complete understanding of the present disclosure. It should be understood that the drawings and embodiments of the present disclosure are merely for example purposes and are not intended to limit the scope of the present disclosure.

It should be noted that the title of any section/subsection provided herein is not limiting. Various embodiments are described throughout and any type of embodiment may be included in any section/subsection. Furthermore, the embodiments described in any section/subsection may be combined in any manner with any other embodiments described in the same section/subsection and/or different section/subsection.

In the description of embodiments of the present disclosure, the term "comprising" and the like should be understood as openness, i.e., "comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first" "second" and the like may refer to different or identical objects. Other explicit and implicit definitions may also be included below.

Embodiments of the present disclosure may relate to data of a user, obtaining and/or usage of data, and the like. These aspects all follow the corresponding laws and regulations and related regulations. In the embodiments of the present disclosure, all data collection, obtaining, handling, processing, forwarding, usage, etc. are conducted with the user's knowledge and consent. Accordingly, when implementing the various embodiments of the present disclosure, types, usage scopes, usage scenarios, and the like of the data or information that may be involved should be informed to the users and obtain user authorization in an appropriate manner according to the relevant laws and regulations. A specific notification and/or authorization manner may vary according to actual situations and application scenarios, and the scope of the present disclosure is not limited in this respect.

The solutions in the present specification and the embodiments, if personal information processing is involved, may be performed on the premise of having a legality basis (for example, obtaining consent of a personal information subject, or being necessary for performing a contract, etc.), and may be processed only within a specified or agreed range. The user rejects personal information other than necessary information required for basic functions, and will not affect use of basic functions by the user.

Some conventional solutions may support obtaining live streaming content of a live streaming room through a preview interface of the live streaming room. Such a preview interface may provide live streaming content in a state not entering the live streaming room.

Such a preview interface provides interactive capabilities that are relatively limited compared to the live streaming interface. For example, the user may need to perform interactive operations such as commenting, collecting, and forwarding after entering the live streaming room.

However, when a user views a preview interface on a terminal device such as a mobile device, such a preview interface is usually displayed in a vertical format, but a picture of some live streaming content may be a horizontal picture, this will affect the viewing experience of the user. However, the user cannot adjust the display mode at the preview interface, but can adjust the picture only after entering the live streaming room, such an interaction process is cumbersome.

In view of this, embodiments of the present disclosure provide a solution for interface interaction. According to the solution, a preview interface of a live streaming room may be presented, and the preview interface of the live streaming room is configured to display the live streaming content of the live streaming room in a state not entering the live streaming room, where the live streaming content is displayed in a first layout mode in the preview interface.

In accordance with receiving a first operation associated with the preview interface, a first live streaming interface of the live streaming room may be presented, such that the live streaming content of the live streaming room is displayed in the first layout mode in the first live streaming interface.

In accordance with receiving a second operation associated with the preview interface, a second live streaming interface of the live streaming room may be presented, such that live streaming content of the live streaming room is displayed in a second layout mode in the second live streaming interface, the second layout mode being different from the first layout mode.

In this way, the embodiments of the present disclosure can support a user quickly switching from a preview interface to a desired layout mode in a live streaming interface, thereby improving interaction efficiency.

Various example implementations of this scheme are described in detail below in conjunction with the accompanying drawings.

### Example Environment

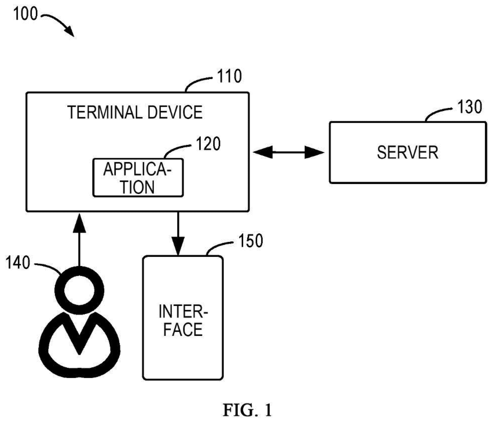

FIG. 1 illustrates a schematic diagram of an example environment 100 in which embodiments of the present disclosure may be implemented. As shown in FIG. 1, the example environment 100 may include a terminal device 110.

In this example environment 100, the terminal device 110 may run an application 120 for providing, viewing media content. The application 120 may be any suitable type of application for providing, viewing media content, examples of the application 120 may include, but are not limited to, online video applications, live streaming applications. A user 140 may interact with the application 120 via the terminal device 110 and/or an attachment device of the terminal device 110. The user 140 may be, for example, a user providing the live streaming content (also referred to as a streamer), a user viewing the live streaming (also referred to as a viewer).

In the environment 100 of FIG. 1, if the application 120 is active, the terminal device 110 may present a live streaming interface 150 through the application 120.

In some embodiments, the terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/camcorder, a positioning device, a television receiver, a radio broadcast receiver, an electronic book device, a game device, or any combination thereof, including accessories and peripherals of these devices, or any combination thereof. In some embodiments, the terminal device 110 can also support any type of interface for a user (such as a "wearable" circuit, etc.).

The server 130 may be a standalone physical server, a server cluster composed of a plurality of physical servers, or a distributed system, or may be a cloud server that provides basic cloud computing services such as cloud services, cloud databases, cloud computing, cloud functions, cloud storages, network services, cloud communications, middleware services, domain name services, security services, content distribution networks, and big data and artificial intelligence platforms and the like. The server 130 may include, for example, a computing system/server, such as a mainframe, an edge computing node, a computing device in a cloud environment, or the like. The server 130 may provide a background service for the application 120 that supports a virtual scenario in the terminal device 110.

A communication connection may be established between the server 130 and the terminal device 110. The communication connection may be established in a wired manner or a wireless manner. The communication connection may include, but is not limited to, a Bluetooth connection, a mobile network connection, a Universal Serial Bus (USB) connection, a Wireless Fidelity (WiFi) connection, and the like, and the embodiments of the present disclosure are not limited in this aspect. In an embodiment of the present disclosure, the server 130 and the terminal device 110 may implement signaling interaction through a communication connection between the server 130 and the terminal device 110.

It should be understood that structures and functions of the various elements in the environment 100 are described for example purposes only and do not imply any limitation to the scope of the present disclosure.

Some example embodiments of the present disclosure will be described below with continued reference to the accompanying drawings.

### Example Interaction

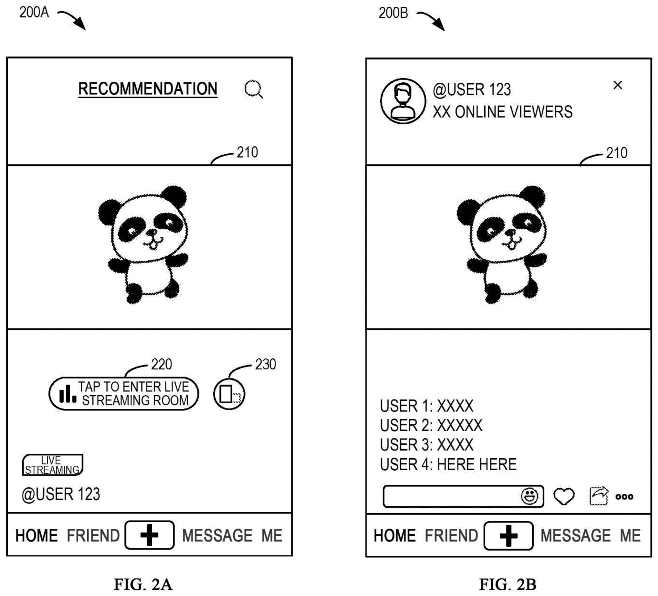

Example interactions of some embodiments of the present disclosure are described below with reference to FIGS. 2A to 2C. FIGS. 2A to 2C illustrate example interfaces 200A to 200C according to some embodiments of the present disclosure, the example interfaces 200A to 200C may be provided, for example, by the terminal device 110 shown in FIG. 1.

Specifically, as shown in FIG. 2A, the terminal device 110 may provide an interface 200A. The interface 200A is a preview interface of a live streaming room. In the interface 200A, the terminal device 110 may display live streaming content 210 of the live streaming room in a state not entering the live streaming room. Such live streaming content 210 may include, for example, picture content or video content.

In some embodiments, the live streaming content 210 is displayed in a first layout mode in the interface 200A. The first layout mode may, for example, indicate a manner in which the live streaming content 210 is arranged in the interface 200A. Taking FIG. 2A as an example, the first layout mode may be, for example, a non-full-screen mode. That is, a format of the live streaming content 210 (i.e., a horizontal format) does not match a format of the live streaming interface (i.e., a vertical format), so that the live streaming content cannot be displayed in a full-screen mode.

In some embodiments, the terminal device 110 may support the user entering the live streaming room by performing a first operation. For example, the terminal device 110 may accept a trigger operation of the user on the live streaming picture 210 to enter the live streaming room, and display an interface 200B shown in FIG. 2B.

As another example, the terminal device 110 may also provide a viewing entry 220 in the interface 200A. After receiving a selection operation on the viewing entry 220, the terminal device 110 may display the interface 200B shown in FIG. 2B.

The interface 200B is a live streaming interface of the live streaming room, also referred to as a first live streaming interface. In some embodiments, in the first live streaming interface, the live streaming content 210 may continue to be displayed in the first layout mode. For example, taking FIG. 2B as an example, the live streaming content 210 continues in the non-full-screen mode in the interface 200B.

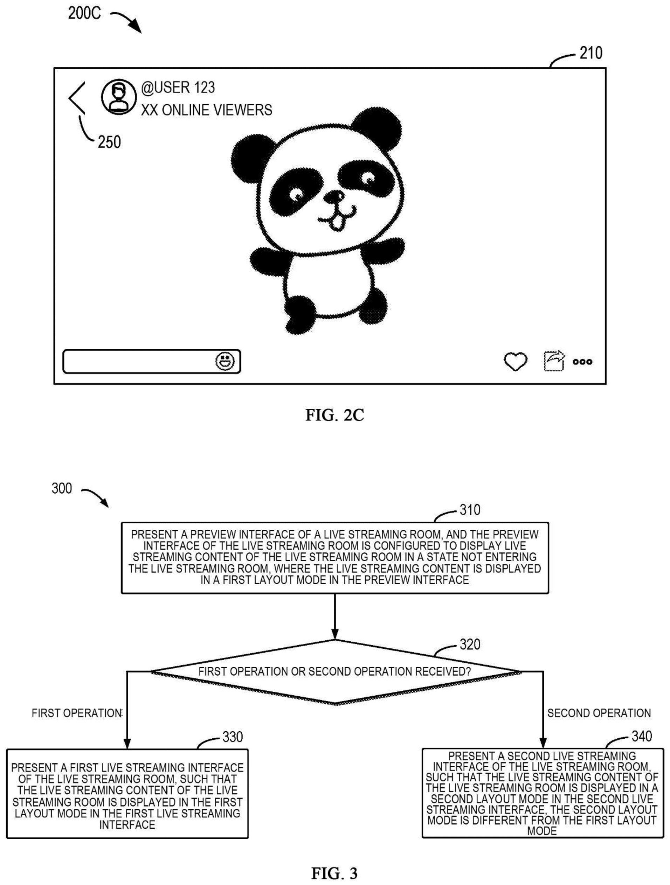

Returning to reference FIG. 2A, in some embodiments, the terminal device 110 may support the user entering the live streaming room by performing a second operation, and may display an interface 200C shown in FIG. 2C. The interface 200C is a live streaming interface of the live streaming room, also referred to as a second live streaming interface.

In some embodiments, the second operation may include, for example, a rotation operation for the terminal device 110. For example, when the user rotates the terminal device 110 from a vertical state to a horizontal state, the terminal device 110 automatically enters the live streaming room and displays the interface 200C shown in FIG. 2C.

As another example, the terminal device 110 may also provide a viewing entry 230 in the interface 200A. Upon receiving a selection operation on the viewing entry 230, the terminal device 110 may enter the live streaming room and display the interface 200C shown in FIG. 2C.

In some embodiments, in the second live streaming interface, the live streaming content 210 may be displayed in a second layout mode different from the first layout mode. For example, taking FIG. 2C as an example, the live streaming content 210 is displayed in the full-screen mode in the interface 200C.

Therefore, the embodiments of the present disclosure may support the user to complete entering the live streaming room and adjust the layout mode through a single operation, thereby improving the interactive experience of the user.

In some embodiments, the viewing entry 220 in FIG. 2A may, for example, always be provided, while the viewing entry 230 may be provided conditionally.

In some embodiments, in accordance with a first format of the live streaming content 210 mismatching a second format of the preview interface, the terminal device 110 may provide the viewing entry 230 in the preview interface, where the first format or the second format is a horizontal format or a vertical format (also referred to as a longitudinal format). For example, the format of the content may indicate that it is horizontal format content (e.g., a width greater than a height) or vertical format content (e.g., the height greater than the width), the format of the interface may indicate that it is a horizontal format interface (e.g., the interface 200A as shown in FIG. 2A) or a vertical format interface (e.g., the interface 200C as shown in FIG. 2C).

Taking FIG. 2A as an example, if the live streaming content 210 is, for example, of a horizontal format, and the preview interface 200A is of a vertical format, the terminal device 110 may correspondingly provide the viewing entry 230. Alternatively, if the live streaming content 210 is of the vertical format, and the preview interface 200A is of the horizontal format, the terminal device 110 may also correspondingly provide the viewing entry 230.

In contrast, if the preview interface 200A and the live streaming content 210 are both of the vertical format or both of the horizontal format, the terminal device 110 may, for example, only provide the viewing entry 220 without providing the viewing entry 230.

In some embodiments, the viewing entry 230 may be provided in association with the live streaming content 210. For example, the viewing entry 230 may be set at a predetermined location, e.g., a lower right corner, of the live streaming content 210.

In some embodiments, the terminal device 110 may also display the viewing entry 220 and the viewing entry 230 in association at the interface 200A. "Display in association" may represent that the viewing entry 220 and the viewing entry 230 have associated display attributes, e.g., both of the viewing entries are located on the same horizontal line, both of the viewing entries are aligned in a specific manner, and so forth. Taking FIG. 2A as an example, the viewing entry 220 and the viewing entry 230 may locate substantially on the same horizontal line.

In this way, the embodiments of the present disclosure can more clearly provide the user with entries to different modes, thereby facilitating the user to quickly select the desired manner to enter the live streaming room from the two entries.

With continued reference to FIG. 2C, in some embodiments, the terminal device 110 may further provide, for example, a switching entry 250 in the interface 200C. In accordance with receiving a selection operation on the switching entry 250, the terminal device 110 may switch to displaying the interface 200B shown in FIG. 2B. That is, the terminal device 110 may switch from the full-screen mode to the non-full-screen mode.

It should be understood that the full screen mode is not intended to represent that the live streaming content 210 needs to fill all parts of the interface 200C. In some cases, due to mismatch between a display ratio of the interface and a picture aspect ratio of the live streaming content, some content in the interface may not be filled.

In some embodiments, if the user performs the first operation discussed above and triggers the interface 200B to be displayed, the first layout mode (e.g., the non-full-screen mode) of the live streaming content 210 in the interface 200B is changeable based on orientation information of the terminal device 110. For example, when the terminal device 110 switches from a vertical orientation to a horizontal orientation, the live streaming interface may switch from the non-full-screen mode to the full-screen mode.

In some embodiments, if the user performs the second operation discussed above and triggers the interface 200C to be displayed, the second layout mode (e.g., the full-screen mode) of the live streaming content 210 in the interface 200C does not change with the orientation information of the terminal device 110. That is, regardless of whether the terminal device 110 is oriented vertically or horizontally, the live streaming interface will remain in the full-screen mode.

In this way, the embodiments of the present disclosure can avoid the influence caused by a misoperation of the user on the display of the live streaming interface, thereby improving the interactive experience of the user.

It should be understood that, although the first layout mode is the non-full-screen mode and the second layout mode is the full-screen mode as an example above, the first layout mode may be, for example, the full-screen mode, and the second layout mode may be, for example, the non-full-screen mode. Therefore, the embodiments of the present disclosure can support the user quickly switching the layout mode of the live streaming content in a preview state.

### Example Process

FIG. 3 illustrates a flowchart of an example interface interaction process 300 according to some embodiments of the present disclosure. The process 300 may be implemented at the terminal device 110 associated with a user (e.g., a viewer) of a live streaming room. The process 300 is described below with reference to FIG. 1.

As shown in FIG. 3, in block 310, the terminal device 110 presents a preview interface of a live streaming room, and the preview interface of the live streaming room is configured to display live streaming content of the live streaming room in a state not entering the live streaming room, where the live streaming content is displayed in a first layout mode in the preview interface.

At block 320, the terminal device 110 determines whether a first operation or a second operation is received.

In block 330, in accordance with receiving a first operation associated with the preview interface, the terminal device 110 presents a first live streaming interface of the live streaming room, such that the live streaming content of the live streaming room is displayed in the first layout mode in the first live streaming interface.

At block 340, in accordance with receiving a second operation associated with the preview interface, the terminal device 110 presents a second live streaming interface of the live streaming room, such that the live streaming content of the live streaming room is displayed in a second layout mode in the second live streaming interface, the second layout mode is different from the first layout mode.

In some embodiments, presenting the second live streaming interface of the live streaming room includes: providing a first viewing entry in the preview interface; and presenting, based on a first selection operation on the first viewing entry, the second live streaming interface of the live streaming room.

In some embodiments, providing the first viewing entry in the preview interface includes: providing, in accordance with a first format of the live streaming content mismatching a second format of the preview interface, the first viewing entry in the preview interface, where the first format or the second format is a horizontal format or a vertical format.

In some embodiments, providing the first viewing entry in the preview interface includes: providing, in accordance with a picture format of the live streaming content being the horizontal format and the preview interface being of the vertical format, the first viewing entry in the preview interface.

In some embodiments, presenting the first live streaming interface of the live streaming room includes: providing a second viewing entry in the preview interface, the first viewing entry and the second viewing entry being displayed in association at the preview interface; and presenting, based on a second selection operation on the second viewing entry, the first live streaming interface of the live streaming room.

In some embodiments, the process 300 further includes: receiving a selection for a switching entry in the second live streaming interface; and presenting the first live streaming interface of the live streaming room.

In some embodiments, the first layout mode is a non-full-screen display mode and the second layout mode is a full-screen display mode.

In some embodiments, the first live streaming interface and the second live streaming interface are provided by a terminal device, where the first layout mode of the first live streaming interface is changeable based on orientation information of the terminal device, and the second layout mode of the second live streaming interface is unchanged with the orientation information.

### Example Device and Apparatus

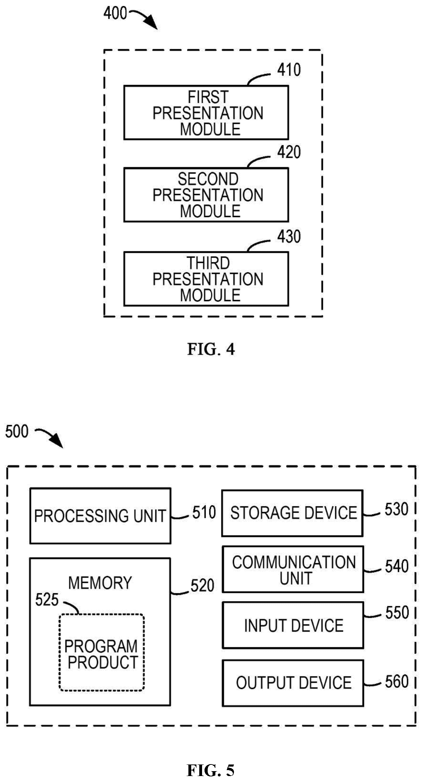

Embodiments of the present disclosure also provide a corresponding apparatus for implementing the above method or process. FIG. 4 illustrates a schematic structural block diagram of an apparatus 400 for interface interaction according to some embodiments of the present disclosure. The apparatus 400 may be implemented as the terminal device 110 or included in the terminal device 110. Various modules/components in the apparatus 400 may be implemented by hardware, software, firmware, or any combination thereof.

As shown in FIG. 4, the apparatus 400 includes: a first presentation module 410 configured to present a preview interface of a live streaming room, the preview interface of the live streaming room being configured to display, in a state not entering the live streaming room, live streaming content of the live streaming room, where the live streaming content is displayed in a first layout mode in the preview interface; a second presentation module 420 configured to present, in accordance with receiving a first operation associated with the preview interface, a first live streaming interface of the live streaming room, such that the live streaming content of the live streaming room is displayed in the first layout mode in the first live streaming interface; and a third presentation module 430 configured to present, in accordance with receiving a second operation associated with the preview interface, a second live streaming interface of the live streaming room, such that the live streaming content of the live streaming room is displayed in a second layout mode in the second live streaming interface, the second layout mode being different from the first layout mode.

In some embodiments, the third presentation module 430 is further configured to: provide a first viewing entry in the preview interface; and present, based on a first selection operation on the first viewing entry, the second live streaming interface of the live streaming room.

In some embodiments, the third presentation module 430 is further configured to: provide, in accordance with a first format of the live streaming content mismatching a second format of the preview interface, the first viewing entry in the preview interface, where the first format or the second format is a horizontal format or a vertical format.

In some embodiments, the third presenting module 430 is further configured to: provide, in accordance with a picture format of the live streaming content being the horizontal format and the preview interface being of the vertical format, the first viewing entry in the preview interface.

In some embodiments, the second presentation module 420 is further configured to: provide a second viewing entry in the preview interface, the first viewing entry and the second viewing entry is displayed in association at the preview interface; and present, based on a second selection operation on the second viewing entry, the first live streaming interface of the live streaming room.

In some embodiments, the apparatus 400 further includes a switching module configured to: receive a selection for a switching entry in the second live streaming interface; and present the first live streaming interface of the live streaming room.

In some embodiments, the first layout mode is a non-full-screen display mode and the second layout mode is a full-screen display mode.

In some embodiments, the first live streaming interface and the second live streaming interface are provided by a terminal device, where the first layout mode of the first live streaming interface is changeable based on orientation information of the terminal device, and the second layout mode of the second live streaming interface is unchanged with the orientation information.

FIG. 5 illustrates a block diagram of an electronic device 500 in which one or more embodiments of the present disclosure may be implemented. It should be understood that the electronic device 500 illustrated in FIG. 5 is merely for example and should not constitute any limitation on the functionality and scope of the embodiments described herein. The electronic device 500 shown in FIG. 5 may be configured to implement the terminal device 110 in FIG. 1.

As shown in FIG. 5, the electronic device 500 is in a form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In a multiprocessor system, a plurality of processing units performs computer-executable instructions in parallel to improve parallel processing capabilities of electronic device 500.

Electronic device 500 typically includes a plurality of computer storage media. Such media may be any available media accessible to the electronic device 500, including, but not limited to, volatile and non-volatile media, removable and non-removable media. The memory 520 may be a volatile memory (e.g., a register, a cache, a random access memory (RAM)), a non-volatile memory (e.g., a read-only memory (ROM), an electrically erasable programmable read-only memory (EEPROM), a flash memory), or some combination thereof. Storage device 530 may be a removable or non-removable medium and may include a machine-readable medium, such as a flash drive, magnetic disk, or any other medium, which may be capable of storing information and/or data and may be accessed within the electronic device 500.

The electronic device 500 may further include additional removable/non-removable, volatile/non-volatile storage media. Although not shown in FIG. 5, a disk drive for reading or writing from a removable, non-volatile magnetic disk (e.g., a "floppy disk") and an optical disk drive for reading or writing from a removable, non-volatile optical disk may be provided. In these cases, each drive may be connected to a bus (not shown) by one or more data media interfaces. The memory 520 may include a computer program product 525 having one or more program modules configured to perform various methods or actions of various embodiments of the present disclosure.

The communication unit 540 is configured to communicate with other electronic devices through a communication medium. Additionally, the functionality of components of the electronic device 500 may be implemented in a single computing cluster or a plurality of computing machines capable of communicating over a communication connection. Thus, the electronic device 500 may operate in a networked environment using logical connections with one or more other servers, network personal computers (PCs), or another network node.

The input device 550 may be one or more input devices, such as a mouse, a keyboard, a trackball, or the like. The output device 560 may be one or more output devices, such as a display, a speaker, a printer, or the like. The electronic device 500 may also communicate with one or more external devices (not shown) through the communication unit 540 as needed, the external devices such as storage devices, display devices, etc. , communicate with one or more devices that enable a user to interact with the electronic device 500, or communicate with any device (e.g., a network card, a modem, etc. ) that enables the electronic device 500 to communicate with one or more other electronic devices. Such communication may be performed via an input/output (I/O) interface (not shown).

According to example implementations of the present disclosure, a computer-readable storage medium having computer executable instructions stored thereon is provided, where the computer executable instructions are executed by a processor to implement the method described above. According to example implementations of the present disclosure, a computer program product is further provided, the computer program product being tangibly stored on a non-transitory computer-readable medium and including computer executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowcharts and/or block diagrams, and combinations of blocks in the flowcharts and/or block diagrams, may be implemented by computer-readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce apparatuses to implement the functions/acts specified in the flowcharts and/or block diagrams. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowcharts and/or block diagrams.

The computer-readable program instructions may be loaded onto a computer, other programmable data processing apparatuses, or other devices, such that a series of operational steps are performed on a computer, other programmable data processing apparatuses, or other devices to produce a computer-implemented process, thereby enabling the instructions executed on a computer, other programmable data processing apparatuses, or other devices to implement the functions/acts specified in the flowcharts and/or block diagrams block or blocks.

The flowcharts and block diagrams in the drawings show architecture, functionality, and operation of possible implementations of systems, methods, and computer program products according to various implementations of the present disclosure. In this regard, each block in the flowcharts or block diagrams may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in a reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or acts, or may be implemented in a combination of dedicated hardware and computer instructions.

Various implementations of the present disclosure have been described above, and the above descriptions are, for example, not exhaustive, and are not limited to the implementations disclosed. Many modifications and variations without departing from the scope and spirit of the various implementations illustrated will be apparent to those of ordinary skill in the art. Selection of the terms used herein is intended to best explain the principles of the implementations, practical applications, or improvements to techniques in the marketplace, or to enable others of ordinary skill in the art to understand the various implementations disclosed herein.

## Claims

1. A method for interface interaction, comprising:
presenting a preview interface of a live stream, the preview interface of the live stream being configured to display live streaming content of the live stream in a state not entering the live stream, wherein the live streaming content is displayed in a first layout mode in the preview interface;
presenting, in accordance with receiving a first operation associated with the preview interface, a first live streaming interface of the live stream, such that the live streaming content of the live stream is displayed in the first layout mode in the first live streaming interface; and
presenting, in accordance with receiving a second operation associated with the preview interface, a second live streaming interface of the live stream, such that the live streaming content of the live stream is displayed in a second layout mode in the second live streaming interface, the second layout mode being different from the first layout mode.

2. The method of claim 1, wherein presenting the second live streaming interface of the live stream comprises:
providing a first viewing entry in the preview interface; and
presenting, based on a first selection operation on the first viewing entry, the second live streaming interface of the live stream.

3. The method of claim 2, wherein providing the first viewing entry in the preview interface comprises:
providing, in accordance with a first format of the live streaming content mismatching a second format of the preview interface, the first viewing entry in the preview interface, wherein the first format or the second format is a horizontal format or a vertical format.

4. The method of claim 3, wherein providing the first viewing entry in the preview interface comprises:
providing, in accordance with a picture format of the live streaming content being the horizontal format and the preview interface being of the vertical format, the first viewing entry in the preview interface.

5. The method of claim 2, wherein presenting the first live streaming interface of the live stream comprises:
providing a second viewing entry in the preview interface, the first viewing entry and the second viewing entry being displayed in association at the preview interface; and
presenting, based on a second selection operation on the second viewing entry, the first live streaming interface of the live stream.

6. The method of claim 1, further comprising:
receiving a selection for a switching entry in the second live streaming interface; and
presenting the first live streaming interface of the live stream.

7. The method of claim 1, wherein the first layout mode is a non-full-screen display mode and the second layout mode is a full-screen display mode.

8. The method of claim 1, wherein the first live streaming interface and the second live streaming interface are provided by a terminal device, wherein the first layout mode of the first live streaming interface is changeable based on orientation information of the terminal device, and the second layout mode of the second live streaming interface is unchanged with the orientation information.

9. An apparatus for interface interaction, comprising:
a first presentation module configured to present a preview interface of a live stream, the preview interface of the live stream being configured to display, in a state not entering the live stream, live streaming content of the live stream, wherein the live streaming content is displayed in a first layout mode in the preview interface;
a second presentation module configured to present, in accordance with receiving a first operation associated with the preview interface, a first live streaming interface of the live stream, such that the live streaming content of the live stream is displayed in the first layout mode in the first live streaming interface; and
a third presentation module configured to present, in accordance with receiving a second operation associated with the preview interface, a second live streaming interface of the live stream, such that the live streaming content of the live stream is displayed in a second layout mode in the second live streaming interface, the second layout mode being different from the first layout mode.

10. An electronic device, comprising:
at least one processing unit; and
at least one memory coupled to the at least one processing unit and storing instructions for execution by the at least one processing unit, wherein the instructions, when executed by the at least one processing unit, cause the electronic device to perform the method of any one of claims 1 to 8.

11. A computer-readable storage medium having a computer program stored thereon, wherein the computer program is executable by a processor to implement the method of any one of claims 1 to 8.
